(19) Europäisches Patentamt
European Patent Office
Office européen des brevets

(11) **EP 1 493 538 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
*B25J 9/16* *(2006.01)*  *G01B 21/04* *(2006.01)*
*G06T 7/00* *(2006.01)*  *B23Q 17/22* *(2006.01)*

(21) Anmeldenummer: **04011813.5**

(22) Anmeldetag: **18.05.2004**

(54) **Bestimmungsverfahren für Istzustände einer Anzahl von Verstellelementen**

Method of determining present state values of a number of adjustment elements

Procédé pour déterminer les états présents pour un nombre d'eléments de réglage

(84) Benannte Vertragsstaaten:
**DE FR GB**

(30) Priorität: **27.06.2003 DE 10329148**
**20.08.2003 DE 10338302**

(43) Veröffentlichungstag der Anmeldung:
**05.01.2005 Patentblatt 2005/01**

(73) Patentinhaber: **SIEMENS AKTIENGESELLSCHAFT**
**80333 München (DE)**

(72) Erfinder: **Puchtler, Thomas**
**91325 Adelsdorf (DE)**

(56) Entgegenhaltungen:
**EP-A- 0 411 139**      **EP-A- 1 302 285**
**US-B1- 6 430 476**

- **RALL K ET AL:**
**"ROBOTERKOORDINATENSYSTEM-URSPRUNGSBESTIMM UNG MIT HILFE DER ROBOTEREIGENEN SENSORIK UNTER BERUECKSICHTIGUNG DES GENAUIGKEITSVERHALTENS" ROBOTERSYSTEME, SPRINGER VERLAG. BERLIN, DE, Bd. 8, Nr. 3, 1992, Seiten 171-181, XP000297477**
- **ZHUANG H: "SELF-CALIBRATION OF PARALLEL MECHANISMS WITH A CASE STUDY ON STEWART PLATFORMS" IEEE TRANSACTIONS ON ROBOTICS AND AUTOMATION, IEEE INC, NEW YORK, US, Bd. 13, Nr. 3, 1. Juni 1997 (1997-06-01), Seiten 387-397, XP000693015 ISSN: 1552-3098**
- **HOLLERBACH J M ET AL: "THE CALIBRATION INDEX AND TAXONOMY FOR ROBOT KINEMATIC CALIBRATION METHODS" INTERNATIONAL JOURNAL OF ROBOTICS RESEARCH, SAGE SCIENCE PRESS, THOUSAND OAKS, US, Bd. 15, Nr. 6, 1. Dezember 1996 (1996-12-01), Seiten 573-591, XP000643808 ISSN: 0278-3649**

**Beschreibung**

Die vorliegende Erfindung betrifft ein Bestimmungsverfahren für Istzustände einer Anzahl von Verstellelementen, mittels derer eine Lage eines Zusatzkörpers relativ zu einem Grundkörper einstellbar ist.

Bei Werkzeugmaschinen, Handhabungsgeräten und Robotern kommt es vor, dass die angetriebenen Bauelemente (= Verstellelemente) nicht rechtwinklig zueinander angeordnet sind. Bei solchen Maschinen ist zum Betrieb der Maschine eine sogenannte kinematische Koordinatentransformation erforderlich, welche räumliche Koordinaten (in der Regel kartesische Koordinaten, im Einzelfall aber auch zylindrische oder Kugelkoordinaten) in Sollwerte für die Maschinenachsen umrechnet. Die Genauigkeit der Positionierung hängt bei diesen Maschinen von einer Vielzahl von Faktoren ab.

So müssen insbesondere die Parameter der kinematischen Transformation genau bekannt sein. Ferner sollte das mathematische Modell zur Beschreibung der kinematischen Transformation so vollständig wie möglich sein. Schließlich müssen die Istzustände der Verstellelemente exakt bekannt sein.

Die geometrischen Parameter der kinematischen Transformation umfassen unter anderem räumliche Koordinaten von Mittelpunkten von Gelenken sowie den gegenseitigen Abstand von Gelenken. Derartige Messungen werden in der Regel auf Koordinatenmessmaschinen durchgeführt. Die Parameter der kinematischen Transformation, also die Positionen von Punkten des Grundkörpers relativ zueinander bzw. die Positionen von Punkten des Zusatzkörpers relativ zueinander, können daher in der Regel mit hinreichender Genauigkeit erfasst werden. Nachdem diese Parameter erfasst sind, müssen jedoch auch noch die Istzustände der Verstellelemente mit großer Genauigkeit bestimmt werden. Dies stellt oftmals ein großes Problem bei der Inbetriebnahme einer Maschine dar. Denn in der weit überwiegenden Anzahl der Anwendungsfälle muss der Istzustand exakt bekannt sein, um den Zusatzkörper korrekt verstellen zu können. Im zusammen gebauten Zustand der Maschine sind die Gelenkmittelpunkte aber in der Regel einer direkten Messung nicht mehr zugänglich.

Es ist denkbar, in wiederholten Versuchen die Istzustände so einzustellen, dass die Positioniergenauigkeit des Zusatzkörpers im Arbeitsraum möglichst hoch ist. Dieses Verfahren ist aber aufwändig und darüber hinaus nicht sehr genau.

Aus der DE 198 28 181 A1 ist ein Verfahren zum Kalibrieren der Kinematik bekannt. Bei diesem Verfahren werden im gesamten Arbeitsraum Vergleiche zwischen einer gemessenen Position und erfassten Istzuständen angestellt und die Parameter sowie die Istzustände der Verstellelemente derart ermittelt, dass der mittlere quadratische Fehler minimiert wird. Auch dieses Verfahren weist nur eine begrenzte Genauigkeit auf und ist darüber hinaus mathematisch sehr komplex.

Die Aufgabe der vorliegenden Erfindung besteht darin, ein Bestimmungsverfahren für Istzustände einer Anzahl von Verstellelementen anzugeben, das einfach, zuverlässig, schnell und hochgenau arbeitet.

Die Aufgabe wird dadurch gelöst,

- dass der Zusatzkörper relativ zum Grundkörper mechanisch derart fixiert wird, dass er nur noch einen Freiheitsgrad aufweist, so dass die Lage des Zusatzkörpers relativ zum Grundkörper mittels einer einzigen skalaren Variable beschreibbar ist,
- dass die Lage des Zusatzkörpers nach dessen Fixieren geändert wird und dadurch bewirkte Zustandsänderungen der Verstellelemente mittels den Verstellelementen zugeordneter Zustandssensoren erfasst werden und
- dass anhand der Zustandsänderungen der Verstellelemente die Istzustände der Verstellelemente ermittelt werden.

Vorzugsweise erfolgt das Ermitteln der Istzustände auf folgende Weise:

- Es wird eine erste Transformationsfunktion ermittelt, die für ein erstes der Verstellelemente angibt, welche Zustandsänderung bei einem vorgegebenen Wert der Variablen und einer vorgegebenen Änderung der Variablen auftritt.
- Anhand der ersten Transformationsfunktion und der für das erste Verstellelement erfassten Zustandsänderung wird eine Korrelationsfunktion ermittelt, die angibt, welche Änderung der Variablen bei einem vorgegebenen Wert der Variablen und der erfassten Zustandsänderung des ersten Verstellelements auftritt.
- Unter Verwertung der Korrelationsfunktion wird mindestens eine weitere Transformationsfunktion ermittelt, die für ein weiteres der Verstellelemente angibt, welche Zustandsänderung bei einem vorgegebenen Wert der Variablen und der erfassten Zustandsänderung des ersten Verstellelements auftritt.
- Es wird ein Endwert der Variablen ermittelt, bei dem die anhand der mindestens einen weiteren Transformationsfunktion ermittelte Zustandsänderung mit der erfassten Zustandsänderung des mindestens einen weiteren Verstellelements übereinstimmt.
- Anhand des Endwerts wird die Lage des Zusatzkörpers relativ zum Grundkörper ermittelt, und daraus werden die Istzustände der Verstellelemente ermittelt.

Wenn die Anzahl von Verstellelementen mindestens drei beträgt (was in aller Regel der Fall ist), erfolgt das Ermitteln des Endwerts vorzugsweise wie folgt:

- Es wird zunächst mindestens ein Erfüllungswert der Variablen ermittelt, bei dem die anhand einer ersten der weiteren Transformationsfunktionen ermittelte Zustandsänderung mit der erfassten Zustandsänderung des korrespondierenden Verstellelements übereinstimmt.
- Sodann wird durch Vergleich der bei dem Erfüllungswert ermittelten Zustandsänderungen der anderen der weiteren Transformationsfunktionen mit den erfassten Zustandsänderungen der korrespondierenden Verstellelemente bestimmt, ob der Erfüllungswert der Endwert ist.

Die Erfüllungswerte können dabei besonders einfach ermittelt werden, wenn aus der Differenz der anhand der ersten der weiteren Transformationsfunktionen ermittelten Zustandsänderung und der erfassten Zustandsänderung des korrespondierenden Verstellelements eine Hilfsfunktion gebildet wird und mindestens eine Nullstelle der Hilfsfunktion ermittelt wird.

Die Bestimmung der Nullstelle kann auf beliebige Art und Weise erfolgen. Derartige Verfahren sind jedem Fachmann geläufig. Es sei nur darauf hingewiesen, dass es sich bei der Hilfsfunktion um eine gewöhnliche, von einer einzigen skalaren Variablen abhängige Funktion handelt. Die Nullstelle kann daher beispielsweise nach dem allgemein bekannten Newton-Verfahren oder gemäß der sogenannten regula falsi bestimmt werden.

Wenn die Hilfsfunktion durch die Differenz von Variable und ermittelter Nullstelle dividiert wird und die durch die Differenz von Variable und ermittelter Nullstelle dividierte Hilfsfunktion an die Stelle der ursprünglichen Hilfsfunktion tritt, sind mit Sicherheit alle Nullstellen der Hilfsfunktion ermittelbar.

Wenn das Ermitteln der Nullstellen der Hilfsfunktion abgebrochen wird, sowie ein Erfüllungswert bestimmt ist, bei dem auch die anhand der anderen der weiteren Transformationsfunktionen ermittelten Zustandsänderungen mit den erfassten Zustandsänderungen der korrespondierenden Verstellelemente übereinstimmen, ist der Aufwand zum Bestimmen des Endwerts und damit der Istzustände der Verstellelemente minimal. Auch arbeitet das Bestimmungsverfahren dann besonders schnell.

In der Regel sind den Verstellelementen weggeregelte Antriebe zugeordnet, mittels derer die Verstellelemente verstellbar sind. In diesem Fall werden vorzugsweise die Antriebe mit Ausnahme eines einzigen Antriebs in einen Nachführbetrieb geschaltet und erfolgt das Ändern der Lage des Zusatzkörpers durch Verstellen desjenigen der Verstellelemente, dessen zugeordneter Antrieb nicht in den Nachführbetrieb geschaltet ist.

Die Istzustände der Verstellelemente können - zumindest teilweise - Längen oder Winkel der Verstellelemente, Positionen der Verstellelemente relativ zum Grundkörper und Positionen der Verstellelemente relativ zum Zusatzkörper sein.

Die Lage des Zusatzkörpers relativ zum Grundkörper kann eine Position und/oder eine Orientierung des Zusatzkörpers relativ zum Grundkörper umfassen.

Der Freiheitsgrad kann ein rotatorischer oder ein translatorischer Freiheitsgrad sein.

Wenn die Anzahl von Verstellelementen drei beträgt, ist das erfindungsgemäße Bestimmungsverfahren beispielsweise bei einem sogenannten Tripod anwendbar. Es ist prinzipiell aber auch z. B. bei einem Hexapod anwendbar, bei dem die Anzahl von Verstellelementen sechs beträgt.

Die Lage des Zusatzkörpers muss nicht deutlich geändert werden. Es reicht aus, wenn das Ändern der Lage des Zusatzkörpers differentiell erfolgt.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung

FIG 1        schematisch eine Produktionsmaschine,
FIG 2 und 3    Ablaufdiagramme und
FIG 4        schematisch eine weitere Produktionsmaschine.

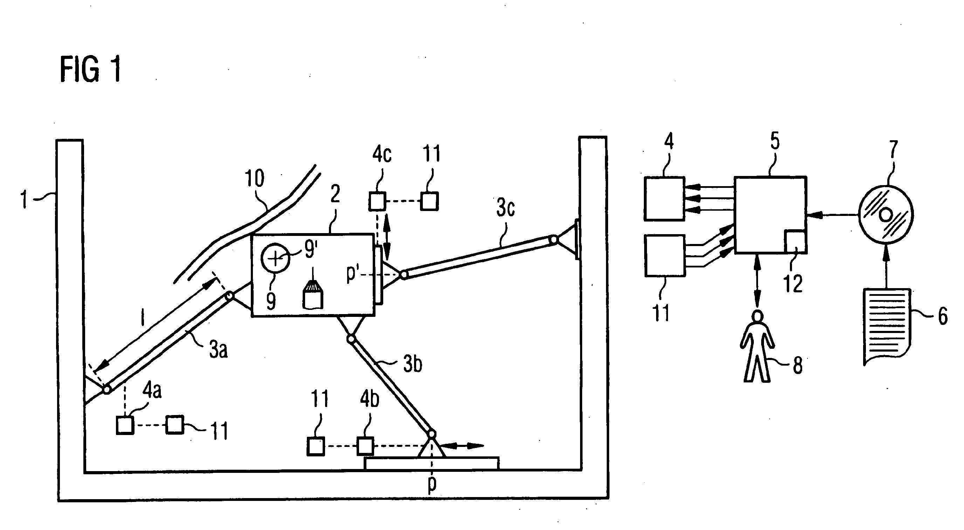

Gemäß FIG 1 weist eine Produktionsmaschine einen Grundkörper 1 und einen Zusatzkörper 2 auf. Der Zusatzkörper 2 ist über eine Anzahl von Verstellelementen 3 mit dem Grundkörper 1 verbunden. Gemäß FIG 1 beträgt die Anzahl von Verstellelementen 3 drei. Dies stellt in der Regel auch die Minimalanzahl von Verstellelementen 3 dar. Zur Unterscheidung der Verstellelemente 3 voneinander werden die Verstellelemente 3, soweit es erforderlich ist, nachfolgend als Verstellelement 3a, Verstellelement 3b und Verstellelement 3c bezeichnet.

Gemäß FIG 1 sind die Verstellelemente 3 mit dem Grundkörper 1 und dem Zusatzkörper 2 gelenkig verbunden. Das Verstellelement 3a ist dabei längenverstellbar. Bezüglich des Verstellelements 3a stellt somit dessen Länge 1 einen Istzustand Z dieses Verstellelements 3a dar. Es könnte alternativ z. B. winkelverstellbar sein.

Bei den Verstellelementen 3b und 3c sind deren Längen fest. Bei dem Verstellelement 3b ist hingegen dessen Position p relativ zum Grundkörper 1 variierbar. Beim Verstellelement 3c ist dessen Position relativ zum Zusatzkörper 2 verstellbar. Bezüglich der Verstellelemente 3b und 3c stellen somit die Positionen p, p' Istzustände Z der jeweiligen Verstellelemente 3b, 3c dar.

Die Darstellung gemäß FIG 1 ist dabei rein exemplarisch. Selbstverständlich könnten auch beliebige andere Kombinationen der Istzustände Z erfolgen. Beispielsweise könnten alle drei Verstellelemente 3 längenverstellbar sein oder relativ zum Grundkörper 1 positionierbar sein.

Die Istzustände Z der Verstellelemente 3 - soweit erforderlich, nachfolgend zur Unterscheidung als Istzustände Za, Zb und Zc bezeichnet - legen eine Position und eine Orientierung des Zusatzkörpers 2 relativ zum Grundkörper 1 fest. Mittels der Verstellelemente 3 ist eine Lage des Zusatzkörpers 2 relativ zum Grundkörper 1 einstellbar. Die Beziehung zwischen den Istzuständen Z und der Lage ist dabei vorzugsweise eineindeutig. Aus der Lage des Zusatzkörpers 2 sind also die Istzustände Z bestimmbar, aus den Istzuständen Z die Lage des Zusatzkörpers 2.

Der Zusatzkörper 2 ist, wie in FIG 1 durch ein Bohrfutter und einen Bohrer symbolisch angedeutet ist, z. B. ein Werkzeugträger 2 einer Werkzeugmaschine. Allgemeiner kann er auch als bewegliches Maschinenelement 2 einer Produktionsmaschine angesehen werden. Er muss - in der Regel sowohl translatorisch als auch rotatorisch - hochgenau positioniert werden können. Dies geschieht über weggeregelte Antriebe 4, die den Verstellelementen 3 zugeordnet sind. Mittels der Antriebe 4 sind die Verstellelemente 3 verstellbar und so die Lage des Zusatzkörpers 2 änderbar. Die Positionierung der Verstellelemente 3 mittels der Antriebe 4 erfolgt dabei in der Regel mit einer Genauigkeit von ca. 1 $\mu$m, also hochgenau.

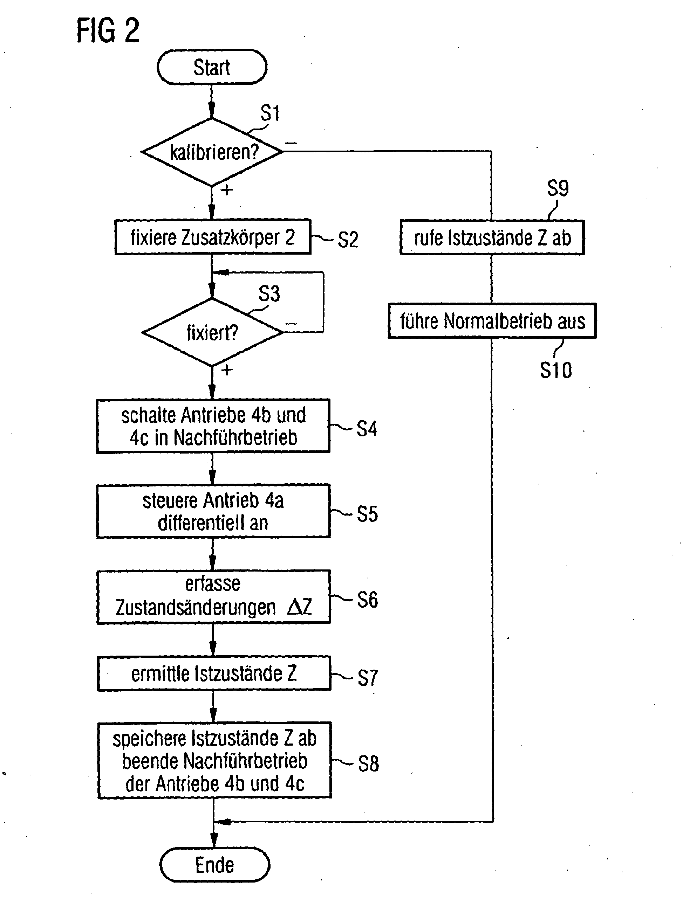

Die Antriebe 4 werden von einer Steuer- und Auswerteeinrichtung 5 angesteuert, z. B. einer numerischen Steuerung 5. Sie ist mit einem Computerprogramm 6 programmiert. Das Computerprogramm 6 wird der Steuer- und Auswerteeinrichtung 5 dabei über einen Datenträger 7, z. B. eine CD-ROM 7, zugeführt, auf dem das Computerprogramm 6 in (ausschließlich) maschinenlesbarer Form hinterlegt ist. Auf Grund der Programmierung mit dem Computerprogramm 6 arbeitet die Steuer- und Auswerteeinrichtung 5, wie nachfolgend in Verbindung mit FIG 2 näher beschrieben wird.

Gemäß FIG 2 prüft die Steuer- und Auswerteeinrichtung 5 in einem Schritt S1 zunächst, ob ihr ein Befehl zum Kalibrieren der Maschine vorgegeben wurde. Wenn dies der Fall ist, verzweigt die Steuer- und Auswerteeinrichtung 5 zu einem Schritt S2, in dem sie eine mechanische Fixierung des Zusatzkörpers 2 relativ zum Grundkörper 1 anfordert. Diese Fixierung wird in der Regel von einer Bedienperson 8 vorgenommen. Das mechanische Fixieren erfolgt dabei derart, dass der Zusatzkörper 2 nur noch einen Freiheitsgrad aufweist. Die Lage des Zusatzkörpers 2 relativ zum Grundkörper 1 ist somit nach dem Fixieren mittels einer einzigen skalaren Variable $\alpha$ beschreibbar.

Gemäß FIG 1 kann beispielsweise mittels eines Bolzens 9 ein vorbestimmter Punkt des Zusatzkörpers 2 derart fixiert werden, dass der Zusatzkörper 2 nur noch um eine Bolzenachse 9' drehbar ist. In diesem Fall ist der Freiheitsgrad ein rotatorischer Freiheitsgrad, nämlich eine Drehung um die Bolzenachse 9'.

Sei z. B. ein beliebiger Punkt der Bolzenachse 9' der Ursprung sowohl eines kartesischen Koordinatensystems des Grundkörpers 1 als auch eines kartesischen Koordinatensystems des Zusatzkörpers 2. Sei ferner v ein Vektor mit Einheitslänge, der parallel zur Bolzenachse 9' verlaufe. Dann lässt sich ein beliebiger Punkt P des Grundkörperkoordinatensystems mittels einer einfachen Matrizenoperation in einen Punkt P' des Zusatzkörperkoordinatensystems umrechnen. Die Rechenoperation lautet dabei

$$P' = M \cdot P.$$

Die Matrix M ist dabei nur noch von dem Drehwinkel $\alpha$ abhängig. $\alpha$ ist somit eine Variable, mit der sich die Lage des Zusatzkörpers 2 relativ zum Grundkörper 1 beschreiben lässt.

Die Matrix M lautet:

$$M(\alpha) = \begin{pmatrix} v_x^2 + \cos(\alpha)(v_y^2 + v_z^2) & v_x v_y (1-\cos(\alpha)) - v_z \sin(\alpha) & v_x v_z (1-\cos(\alpha)) + v_y \sin(\alpha) \\ v_x v_y (1-\cos(\alpha)) + v_z \sin(\alpha) & v_y^2 + \cos(\alpha)(v_x^2 + v_z^2) & v_y v_z (1-\cos(\alpha)) - v_x \sin(\alpha) \\ v_x v_z (1-\cos(\alpha)) - v_y \sin(\alpha) & v_y v_z (1-\cos(\alpha)) + v_x \sin(\alpha) & v_z^2 + \cos(\alpha)(v_x^2 + v_y^2) \end{pmatrix}$$

Ist der Drehwinkel $\alpha$ (die Variable $\alpha$) bekannt, lassen sich somit Koordinaten von Befestigungspunkten der Verstellelemente 3 vom Zusatzkörperkoordinatensystem in Koordinaten des Grundkörperkoordinatensystems umrechnen und umgekehrt. Folglich lassen sich die Koordinaten korrespondierender Befestigungspunkte, z. B. der Befestigungspunkte des Verstellelements 3a, im selben Koordinatensystem ausdrücken. Auf Grund des Bekanntseins beider Endpunkte im selben Koordinatensystem ist somit auch beispielsweise die Länge 1 des Verstellelements 3a bestimmbar.

Es wäre aber auch denkbar, wie in FIG 1 gestrichelt angedeutet, den Zusatzkörper 2 an einer Führungsschiene 10 zu befestigen. In diesem Fall wäre der Freiheitsgrad ein translatorischer Freiheitsgrad, nämlich ein Verschieben entlang der Führungsschiene 10. Auch bei einem translatorischen Freiheitsgrad lässt sich auf analoge Weise wie bei einem rotatorischen Freiheitsgrad eine Koordinatenumrechnung vornehmen.

Nach dem Schritt S2 wird ein Schritt S3 ausgeführt. Im Schritt S3 wartet die Steuer- und Auswerteeinrichtung 5 ab, bis das Fixieren des Zusatzkörpers 2 abgeschlossen ist. Beispielsweise kann sie im Schritt 3 verharren, bis ihr von der Bedienperson 8 eine Bestätigungseingabe vorgegeben wird.

Nach dem Schritt S3 führt die Steuer- und Auswerteeinrichtung 5 einen Schritt S4 aus. Im Schritt S4 werden zwei der Antriebe 4, beispielsweise die Antriebe 4b und 4c, in einen Nachführbetrieb geschaltet. Nur ein einziger Antrieb 4, hier der Antrieb 4a, wird nicht in den Nachführbetrieb geschaltet.

Sodann steuert die Steuer- und Auswerteeinrichtung 5 in einem Schritt S5 den Antrieb 4a differentiell an. Dadurch wird der Istzustand Za differentiell geändert. Durch dieses differentielle Ändern des Istzustands Za wird auch die Lage des Zusatzkörpers 2 differentiell geändert. Er wird beispielsweise geringfügig um den Bolzen 9 gedreht oder entlang der Führungsschiene 10 verschoben. Durch dieses Ändern der Lage des Zusatzkörpers 2 werden auch die Istzustände Zb, Zc der anderen Verstellelemente 3b, 3c differentiell geändert.

Die Zustandsänderungen $\Delta Z$ werden von der Steuer- und Auswerteeinrichtung 5 in einem Schritt S6 erfasst. Das Erfassen erfolgt dabei beispielsweise durch Lagesensoren 11, die den Antrieben 4 und damit indirekt auch den Verstellelementen 3 zugeordnet sind.

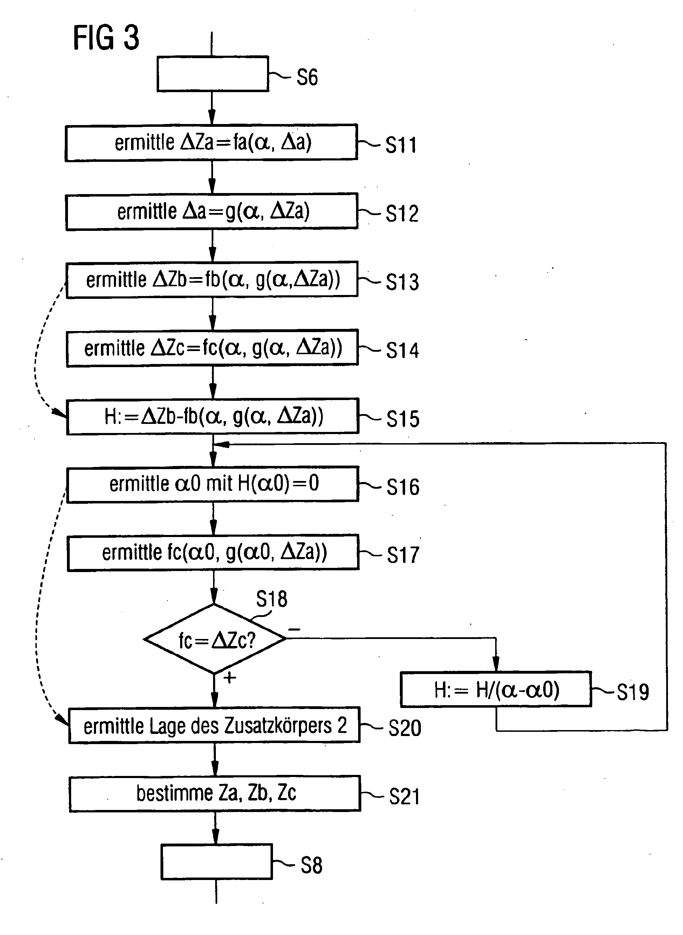

In einem Schritt S7 ermittelt die Steuer- und Auswerteeinrichtung 5 dann anhand der erfassten Zustandänderungen $\Delta Z$ der Verstellelemente 3 die Istzustände Z der Verstellelemente 3. Auf diesen Schritt S7 wird später in Verbindung mit FIG 3 noch näher eingegangen werden. Die ermittelten Istzustände Z werden schließlich in einem Schritt S8 in einem Speicher 12 hinterlegt sowie der Nachführbetrieb der Antriebe 4b und 4c beendet. Die Abfolge der Schritte S2 bis S7 entspricht somit einem Bestimmungsverfahren, in dem die Istzustände Z der Verstellelemente 3 bestimmt werden.

Wenn der Steuer- und Auswerteeinrichtung 5 im Schritt S1 kein Befehl zum Kalibrieren der Maschine vorgegeben wurde, verzweigt sie zu einem Schritt S9. Im Schritt S9 ruft sie die - dann voraussetzungsgemäß bekannten - Istzustände Z aus dem Speicher 12 ab. Sodann geht sie in einem Schritt S10 in den Normalbetrieb über.

Das Ermitteln der Istzustände Z anhand der erfassten Zustandsänderungen $\Delta Z$ (= Schritt S7) wird nunmehr nachfolgend in Verbindung mit FIG 3 näher erläutert.

Gemäß FIG 3 wird zunächst in einem Schritt S11 eine erste Transformationsfunktion fa ermittelt. Die erste Transformationsfunktion fa gibt für eines der Verstellelemente 3, z. B. das Verstellelement 3a an, welche Zustandsänderung $\Delta Za$ auftritt, wenn bei einem vorgegebenen Wert der Variablen $\alpha$ eine vorgegebene Änderung $\Delta\alpha$ der Variablen $\alpha$ auftritt.

Derartige Transformationsfunktionen fa sind üblich und allgemein bekannt. Sie werden unter anderem benötigt, um bei bekannten Istzuständen Z Zustandsänderungen $\Delta Z$ bzw. neue Istzustände Z richtig vorgeben zu können, so dass eine gewünschte Lage des Zusatzkörpers 2 relativ zum Grundkörper 1 eingenommen wird.

Anhand der ersten Transformationsfunktion $fa(\alpha,\Delta\alpha)$ und der erfassten Zustandsänderung $\Delta Za$ des ersten Verstellelements 3a kann daher in einem Schritt S12 eine Korrelationsfunktion g ermittelt werden. Die Korrelationsfunktion g gibt an, welche Änderung $\Delta\alpha$ der Variablen $\alpha$ bei einem vorgegebenen Wert der Variablen $\alpha$ und der erfassten Zustandsänderung $\Delta Za$ des ersten Verstellelements 3a auftritt.

Auch das Bestimmen der Korrelationsfunktion g ist ohne Weiteres möglich. Denn die Transformationsfunktionen f sind - siehe oben - bekannt, so dass durch Einsetzen und iteratives Annähern bei gegebener Zustandsänderung $\Delta Za$ ohne Weiteres die Änderung $\Delta\alpha$ als Funktion der Variablen $\alpha$ bestimmt werden kann.

Unter Verwertung der Korrelationsfunktion $g(\alpha,\Delta Za))$ kann daher in einem Schritt S13 eine zweite Transformationsfunktion fb ermittelt werden. Die zweite Transformationsfunktion fb gibt für ein zweites der Verstellelemente 3, z. B. das Verstellelement 3b, an, welche Zustandsänderung $\Delta Zb$ bei einem vorgegebenen Wert der Variablen $\alpha$ und der erfassten Zustandsänderung $\Delta Za$ des ersten Verstellelements 3a auftritt. In gleicher Weise kann in einem Schritt S14 eine dritte Transformationsfunktion fc für das noch verbleibende der Verstellelemente 3, hier das Verstellelement 3c, ermittelt werden.

In einem nachfolgenden Schritt S15 bildet die Steuer- und Auswerteeinrichtung 5 aus der Differenz der zweiten Transformationsfunktion fb und der erfassten Zustandsänderung $\Delta Zb$ des zweiten Verstellelements 3b eine Hilfsfunktion H.

In einem Schritt S16 kann daher für diese, nur von der Variablen $\alpha$ abhängige Hilfsfunktion H, wie für jede andere von nur einer einzigen skalaren Variablen abhängige Funktion, eine Nullstelle $\alpha 0$ ermittelt werden. Das Ermitteln der Nullstelle $\alpha 0$ kann beispielsweise gemäß dem allgemein bekannten Newton-Verfahren oder gemäß der ebenfalls allgemein bekannten regula falsi oder auch beispielsweise gemäß der Methode der Intervallteilung erfolgen.

Die so ermittelte Nullstelle $\alpha 0$ ist ein Erfüllungswert $\alpha 0$ der Variablen $\alpha$, bei dem die anhand der zweiten Transformationsfunktion fb ermittelte Zustandsänderung mit der erfassten Zustandsänderung $\Delta Zb$ des zweiten Verstellelements 3b übereinstimmt. Dieser Erfüllungswert $\alpha 0$ wird daher in einem Schritt S17 in die dritte Transformationsfunktion fc eingesetzt. In einem Schritt S18 wird dann geprüft, ob bei diesem Erfüllungswert $\alpha 0$ auch die anhand der dritten Transformationsfunktion fc ermittelte Zustandsänderung mit der erfassten Zustandsänderung $\Delta Zc$ des dritten Verstellelements 3c übereinstimmt.

Wenn die Übereinstimmung nicht gegeben ist, wird in einem Schritt S19 die Hilfsfunktion H durch die Differenz von Variable $\alpha$ und ermittelter Nullstelle $\alpha 0$ dividiert und so eine neue Hilfsfunktion H ermittelt, welche an die Stelle der ursprünglichen Hilfsfunktion H tritt. Danach wird zum Schritt S16 zurück gesprungen.

Wenn hingegen die Prüfung im Schritt S18 eine Übereinstimmung ergibt, wird der Erfüllungswert $\alpha 0$ zum Endwert $\alpha 0$ bestimmt. In diesem Fall wird in einem Schritt S20 anhand des Endwerts $\alpha 0$ die Lage des Zusatzkörpers 2 relativ zum Grundkörper 1 ermittelt. Anhand der nunmehr bekannten Lage des Zusatzkörpers 2 relativ zum Grundkörper 1 können dann in einem Schritt S21 die Istzustände Z der Verstellelemente 3 ermittelt werden. Ein Ermitteln weiterer Erfüllungswerte $\alpha 0$ ist somit nicht mehr erforderlich. Vielmehr kann das Ermitteln der Nullstellen $\alpha 0$ der Hilfsfunktion H abgebrochen werden.

Obenstehend wurde in Verbindung mit den FIG 1 bis 3 beschrieben, wie die Istzustände Z der Verstellelemente 3 ermittelt werden können, wenn drei Verstellelemente 3 vorhanden sind. Es wurde also ein Bestimmungsverfahren für die Istzustände Z der Verstellelemente 3 eines sogenannten Tripods beschrieben. Ergänzend wurde ein Verfahren beschrieben, bei dem der Zusatzkörper 2 relativ zum Grundkörper 1 einen rotatorischen und zwei translatorische Freiheitsgrade besitzt. Selbstverständlich sind aber auch andere Konfigurationen möglich und denkbar. Z. B. können - wieder bei drei Verstellelementen 3 - auch ein translatorischer und zwei rotatorische Freiheitsgrade vorhanden sein. Auch ist es möglich, dass nur eine translatorische Bewegung oder nur eine rotatorische Bewegung möglich ist.

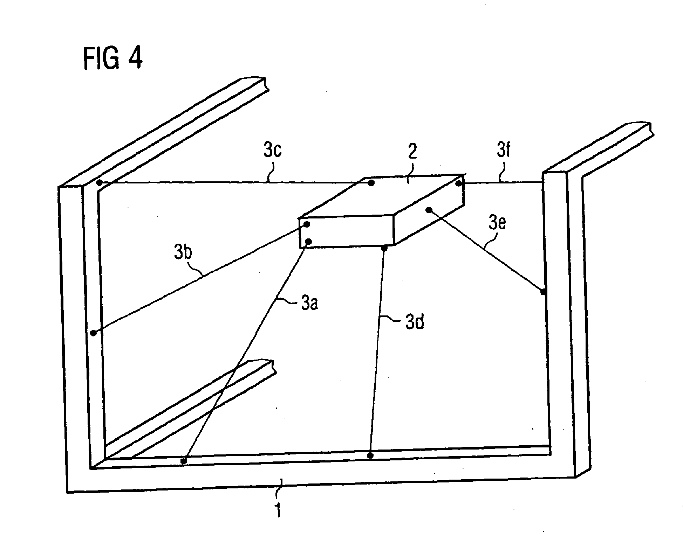

Im allgemeinen Fall weist der Zusatzkörper 2 gegenüber dem Grundkörper 1 sogar sowohl drei translatorische als auch drei rotatorische Freiheitsgrade auf. In diesem Fall sind zum Einstellen der Lage des Zusatzkörpers 2 relativ zum Grundkörper 1 sechs Verstellelemente 3 erforderlich. Dies ist schematisch in FIG 4 dargestellt. Auch bei diesem Anwendungsfall bleibt aber die in Verbindung mit FIG 3 beschriebene Vorgehensweise unverändert gültig. Lediglich diejenigen der Schritte S11 bis S21, die das weitere Verstellelement 3c betreffen, müssen auf mehrere Verstellelemente 3c bis 3f angewendet werden. Diese Verstellelemente 3c bis 3f können aber getrennt voneinander behandelt werden, so dass die betreffenden Schritte S14, S17, S18 und S21 nur mehrfach, nämlich je einmal für jedes der Verstellelemente 3c bis 3f, ausgeführt werden müssen.

Zum Durchführen des erfindungsgemäßen Bestimmungsverfahrens müssen bei dem Ausführungsbeispiel gemäß FIG 4 ferner fünf der Antriebe in den Nachführbetrieb überführt werden und der Zusatzkörper 2 in fünf Freiheitsgraden fixiert werden.

Zum Fixieren in fünf Freiheitsgraden gibt es unter anderem folgende Möglichkeiten:

- Am Grundkörper 1 wird ein Drehgelenk montiert und daran der Zusatzkörper 2 befestigt. In diesem Fall weist der Zusatzkörper 2 nur noch einen Freiheitsgrad auf, nämlich eine Drehung um diese Achse.
- Am Grundkörper 1 wird eine Linearführung in beliebiger Ausrichtung montiert. Danach wird der Zusatzkörper 2 derart an der Linearführung befestigt, dass seine Orientierung konstant bleibt. Somit besitzt der Zusatzkörper 2 nur noch einen translatorischen Freiheitsgrad, nämlich eine Bewegung in Richtung der Führung.

Das erfindungsgemäße Verfahren ist sogar bei nur zwei Verstellelementen 3 anwendbar. In diesem Fall können die Schritte S14, S17, S18 und S19 entfallen. Diese Schritte können also, wie in FIG 3 gestrichelt angedeutet, in diesem Fall übersprungen werden.

Die Vorteile des erfindungsgemäßen Bestimmungsverfahrens sind vielfältig. Insbesondere können die sowieso vorhanden, hochgenauen, antriebsinternen Lagesensoren 11 zur Erfassung der Zustandsänderungen $\Delta Z$ verwendet werden. Auch müssen keine aufwändigen Verfahrbewegungen ausgeführt werden. Es genügt vielmehr z. B. bei einer Werkzeugmaschine das Starten eines Teileprogramms. Ferner ist das erfindungsgemäße Bestimmungsverfahren vollautomatisch ausführbar. Schließlich greift das erfindungsgemäße Bestimmungsverfahren insbesondere zum Ermitteln der Transformationsfunktionen f und der Korrelationsfunktion g auf Transformationsformeln zurück, die ebenfalls sowieso in der Steuer- und Auswerteeinrichtung 5 hinterlegt sind. Insbesondere auch aus diesem Grund ist der Zeitaufwand zum Bestimmen der Istzustände Z sehr gering. Er liegt meist im Bereich weniger Millisekunden.

**Patentansprüche**

1. Bestimmungsverfahren für Istzustände (Z) einer Anzahl von Verstellelementen (3), mittels derer eine Lage eines Zusatzkörpers (2) relativ zu einem Grundkörper (1) einstellbar ist,

   - wobei der Zusatzkörper (2) relativ zum Grundkörper (1) mechanisch derart fixiert wird, dass er nur noch einen Freiheitsgrad aufweist, so dass die Lage des Zusatzkörpers (2) relativ zum Grundkörper (1) mittels einer einzigen

skalaren Variable ($\alpha$) beschreibbar ist,

- wobei die Lage des Zusatzkörpers (2) nach dessen Fixieren geändert wird und **dadurch** bewirkte Zustands-änderungen ($\Delta Z$) der Verstellelemente (3) mittels den Verstellelementen (3) zugeordneter Sensoren (11) erfasst werden und

- wobei anhand der Zustandsänderungen (AZ) der Verstellelemente (3) die Istzustände (Z) der Verstellelemente (3) ermittelt werden.

2. Bestimmungsverfahren nach Anspruch 1,
   **dadurch gekennzeichnet,**

   - **dass** eine erste Transformationsfunktion (fa) ermittelt wird, die für ein erstes (3a) der Verstellelemente (3) angibt, welche Zustandsänderung bei einem vorgegebenen Wert der Variablen ($\alpha$) und einer vorgegebenen Änderung ($\Delta\alpha$) der Variablen ($\alpha$) auftritt,
   - **dass** anhand der ersten Transformationsfunktion (fa) und der für das erste Verstellelement (3a) erfassten Zustandsänderung ($\Delta Za$) eine Korrelationsfunktion (g) ermittelt wird, die angibt, welche Änderung ($\Delta\alpha$) der Variablen ($\alpha$) bei einem vorgegebenen Wert der Variablen ($\alpha$) und der erfassten Zustandsänderung ($\Delta Za$) des ersten Verstellelements (3a) auftritt,
   - **dass** unter Verwertung der Korrelationsfunktion (g) mindestens eine weitere Transformationsfunktion (fb, fc) ermittelt wird, die für ein weiteres (3b, 3c) der Verstellelemente (3) angibt, welche Zustandsänderung bei einem vorgegebenen Wert der Variablen ($\alpha$) und der erfassten Zustandsänderung (AZa) des ersten Verstellelements (3a) auftritt,
   - **dass** ein Endwert ($\alpha$0) der Variablen ($\alpha$) ermittelt wird, bei dem die anhand der mindestens einen weiteren Transformationsfunktion (fb, fc) ermittelte Zustandsänderung mit der erfassten Zustandsänderung ($\Delta Zb$, $\Delta zc$) des mindestens einen weiteren Verstellelements (3b, 3c) übereinstimmt, und
   - **dass** anhand des Endwerts ($\alpha$0) die Lage des Zusatzkörpers (2) relativ zum Grundkörper (1) ermittelt wird und daraus die Istzustände (Z) der Verstellelemente (3) ermittelt werden.

3. Bestimmungsverfahren nach Anspruch 2,
   **dadurch gekennzeichnet,**

   - **dass** zunächst mindestens ein Erfüllungswert ($\alpha$0) der Variablen ($\alpha$) ermittelt wird, bei dem die anhand einer ersten (fb) der weiteren Transformationsfunktionen (fb, fc) ermittelte Zustandsänderung mit der erfassten Zustandsänderung (AZb) des korrespondierenden Verstellelements (3b) übereinstimmt, und
   - **dass** sodann durch Vergleich der bei dem Erfüllungswert ($\alpha$0) ermittelten Zustandsänderungen der anderen (3c) der weiteren Transformationsfunktionen (fb, fc) mit den erfassten Zustandsänderungen ($\Delta Zc$) der korre-spondierenden Verstellelemente (3c) bestimmt wird, ob der Erfüllungswert ($\alpha$0) der Endwert ($\alpha$0) ist.

4. Bestimmungsverfahren nach Anspruch 3,
   **dadurch gekennzeichnet ,**
   **dass** aus der Differenz der ersten (fb) der weiteren Transformationsfunktionen (fb, fc) und der erfassten Zustands-änderung ($\Delta Zb$) des korrespondierenden Verstellelements (3b) eine Hilfsfunktion (H) gebildet wird und dass zum Ermitteln der Erfüllungswerte ($\alpha$0) mindestens eine Nullstelle ($\alpha$0) der Hilfsfunktion (H) ermittelt wird.

5. Bestimmungsverfahren nach Anspruch 4,
   **dadurch gekennzeichnet ,**
   **dass** nach dem Ermitteln der Nullstelle ($\alpha$0) die Hilfsfunktion (H) durch die Differenz von Variable ($\alpha$) und ermittelter Nullstelle ($\alpha$0) dividiert wird und die durch die Differenz von Variable ($\alpha$) und ermittelter Nullstelle ($\alpha$0) dividierte Hilfsfunktion (H) an die Stelle der ursprünglichen Hilfsfunktion (H) tritt.

6. Bestimmungsverfahren nach Anspruch 4 oder 5,
   **dadurch gekennzeichnet ,**
   **dass** das Ermitteln der Nullstellen ($\alpha$0) der Hilfsfunktion (H) abgebrochen wird, sowie ein Erfüllungswert ($\alpha$0) be-stimmt ist, bei dem auch die anhand der anderen (fc) der weiteren Transformationsfunktionen (fb, fc) ermittelten Zustandsänderungen mit den erfassten Zustandsänderungen ($\Delta Zc$) der korrespondierenden Verstellelemente (3c) übereinstimmen.

7. Bestimmungsverfahren nach einem der obigen Ansprüche,
   **dadurch gekennzeichnet ,**

**dass** den Verstellelementen (3) weggeregelte Antriebe (4) zugeordnet sind, mittels derer die Verstellelemente (3) verstellbar sind, dass die Antriebe (4) mit Ausnahme eines einzigen Antriebs (4a) in einen Nachführbetrieb geschaltet werden und dass das Ändern der Lage des Zusatzkörpers (2) durch Verstellen desjenigen (3a) der Verstellelemente (3) erfolgt, dessen zugeordneter Antrieb (4a) nicht in den Nachführbetrieb geschaltet ist.

8. Bestimmungsverfahren nach einem der obigen Ansprüche,
   **dadurch gekennzeichnet ,**
   **dass** die Istzustände (Z) der Verstellelemente (3) zumindest teilweise Längen (l) oder Winkel der Verstellelemente (3a) sind.

9. Bestimmungsverfahren nach einem der obigen Ansprüche,
   **dadurch gekennzeichnet ,**
   **dass** die Istzustände (Z) der Verstellelemente (3) zumindest teilweise Positionen (p) der Verstellelemente (3b) relativ zum Grundkörper (1) sind.

10. Bestimmungsverfahren nach einem der obigen Ansprüche,
    **dadurch gekennzeichnet ,**
    **dass** die Istzustände (Z) der Verstellelemente (3) zumindest teilweise Positionen (p') der Verstellelemente (3c) relativ zum Zusatzkörper (2) sind.

11. Bestimmungsverfahren nach einem der obigen Ansprüche,
    **dadurch gekennzeichnet ,**
    **dass** die Lage des Zusatzkörpers (2) relativ zum Grundkörper (1) eine Position und/oder eine Orientierung des Zusatzkörpers (2) relativ zum Grundkörper (1) umfasst.

12. Bestimmungsverfahren nach einem der Ansprüche 1 bis 11,
    **dadurch gekennzeichnet ,**
    **dass** der Freiheitsgrad ein rotatorischer Freiheitsgrad ist.

13. Bestimmungsverfahren nach einem der Ansprüche 1 bis 11,
    **dadurch gekennzeichnet ,**
    **dass** der Freiheitsgrad ein translatorischer Freiheitsgrad ist.

14. Bestimmungsverfahren nach einem der obigen Ansprüche,
    **dadurch gekennzeichnet ,**
    **dass** die Anzahl von Verstellelementen (3) sechs beträgt.

15. Bestimmungsverfahren nach einem der obigen Ansprüche,
    **dadurch gekennzeichnet ,**
    **dass** das Ändern der Lage des Zusatzkörpers (2) differentiell erfolgt.

16. Auf einem Datenträger (7) gespeichertes Computerprogramm, das von einer Steuer- und Auswerteeinrichtung (5) für eine Produktionsmaschine ausführbar ist, wobei das Ausführen des Computerprogramms durch die Steuer- und Auswerteeinrichtung (5) bewirkt, dass die Steuer- und Auswerteeinrichtung (5)

    - in einem Normalbetrieb unter Verwendung einer von Istzuständen (Z) von Verstellelementen (3), mittels derer eine Lage eines Zusatzkörpers (2) der Produktionsmaschine relativ zu einem Grundkörper (1) der Produktionsmaschine eingestellt wird, abhängigen kinematischen Transformation Sollwerte für die Verstellelemente (3) der Produktionsmaschine ermittelt und die Verstellelemente (3) entsprechend den ermittelten Sollwerten ansteuert und
    - in einem Kalibrierbetrieb, in dem der Zusatzkörper (2) relativ zum Grundkörper (1) einen einzigen vorbekannten Freiheitsgrad aufweist, von den Verstellelementen (3) zugeordneten Lagesensoren (11) erfasste Zustandsänderungen (ΔZ) der Verstellelemente (3) entgegen nimmt und anhand der Zustandsänderungen (ΔZ) der Verstellelemente (3) die Istzustände (Z) der Verstellelemente (3) ermittelt.

17. Mit einem Computerprogramm (6) nach Anspruch 16 programmierte Steuer- und Auswerteeinrichtung für eine Produktionsmaschine, insbesondere eine Werkzeugmaschine.

**18.** Produktionsmaschine, insbesondere Werkzeugmaschine, mit einem Grundkörper (1) und einem mit dem Grundkörper (1) über Verstellelemente (3) verbundenen Zusatzkörper (2), wobei die Verstellelemente (3) mittels Antrieben (4) verstellbar sind, wobei den Verstellelementen (3) Lagesensoren (11) zur Erfassung von Zustandsänderungen (∆Z) der Verstellelemente (3) zugeordnet sind, wobei die Produktionsmaschine eine Steuer- und Auswerteeinrichtung (5) aufweist, die entsprechend Anspruch 17 ausgebildet ist und mit den Lagesensoren (11) und den Antrieben (4) datentechnisch verbunden ist.

**Claims**

**1.** Method for determining actual states (Z) of a number of adjusting elements (3) by means of which a position of an additional member (2) relative to a basic member (1) can be set,

- in which the additional member (2) is fixed mechanically relative to the basic member (1) in such a way that it has only one degree of freedom such that the position of the additional member (2) relative to the basic member (1) can be described by means of a single scalar variable ($\alpha$),
- in which the position of the additional member (2) is changed after fixing the latter, and changes (∆Z), effected thereby, in state of the adjusting elements (3) are detected by means of sensors (11) assigned to the adjusting elements (3), and
- in which the actual states (Z) of the adjusting elements (3) are determined with the aid of the changes (∆Z) in state of the adjusting elements (3).

**2.** Determining method according to Claim 1,
**characterized**

- **in that** a first transformation function (fa) is determined that specifies for a first (3a) of the adjusting elements (3) which change in state occurs for a prescribed value of the variable ($\alpha$) and a prescribed change ($\Delta\alpha$) in the variable ($\alpha$),
- **in that** the first transformation function (fa) and the change (∆Za) in state detected for the first adjusting element (3a) are used to determine a correlation function (g) that specifies which change ($\Delta\alpha$) in the variable ($\alpha$) occurs for a prescribed value of the variable ($\alpha$) and the detected change (∆Za) in state of the first adjusting element (3a),
- **in that** the correlation function (g) is used to determine at least one further transformation function (fb, fc) that specifies for a further (3b, 3c) one of the adjusting elements (3) which change in state occurs for a prescribed value of the variable ($\alpha$) and of the detected change (∆Za) in state of the first adjusting element (3a),
- **in that** a final value ($\alpha$0) of the variable ($\alpha$) is determined for which the change in state determined with the aid of the at least one further transformation function (fb, fc) corresponds to the detected change (∆Zb, ∆ZC) in state of the at least one further adjusting element (3b, 3c), and
- **in that** the final value ($\alpha$0) is used to determine the position of the additional member (2) relative to the basic member (1), and the actual states (Z) of the adjusting elements (3) are determined therefrom.

**3.** Determining method according to Claim 2,
**characterized**

- **in that** firstly at least one satisfying value ($\alpha$0) of the variable ($\alpha$) is determined for which the change in state determined with the aid of a first (fb) of the further transformation functions (fb, fc) corresponds to the detected change (∆Zb) in state of the corresponding adjusting element (3b), and
- **in that** it is then determined by comparing the changes, determined for the satisfying value ($\alpha$0), in the state of the other (3c) ones of the further transformation functions (fb, fc) with the detected changes (∆Zc) in state of the corresponding adjusting elements (3c) whether the satisfying value ($\alpha$0) is the final value ($\alpha$0).

**4.** Determining method according to Claim 3,
**characterized**
**in that** an auxiliary function (H) is formed from the difference between the first (fb) of the further transformation functions (fb, fc) and the detected change (∆Zb) in state of the corresponding adjusting element (3b), and in that at least one zero ($\alpha$0) of the auxiliary function (H) is determined in order to determine the satisfying value ($\alpha$0).

**5.** Determining method according to Claim 4,
**characterized**

**in that** after the determination of the zero ($\alpha$0) the auxiliary function (H) is divided by the difference between the variable ($\alpha$) and determined zero ($\alpha$0), and the auxiliary function (H) divided by the difference between the variable ($\alpha$) and determined zero ($\alpha$0) takes the place of the original auxiliary function (H).

6.  Determining method according to Claim 4 or 5,
    **characterized**
    **in that** the determination of the zeros ($\alpha$0) of the auxiliary function (H) is terminated and a satisfying value ($\alpha$0) is determined for which the changes in state determined with the aid of the other (fc) ones of the further transformation functions (fb, fc) also corresponds to the detected changes ($\Delta$Zc) in state of the corresponding adjusting elements (3c).

7.  Determining method according to one of the above claims,
    **characterized**
    **in that** the adjusting elements (3) are assigned controlled-displacement drives (4) by means of which the adjusting elements (3) can be adjusted, in that, with the exception of a single drive (4a), the drives (4) are switched into a tracking mode, and in that the change in the position of the additional member (2) is performed by adjusting that one (3a) of the adjusting elements (3) whose assigned drive (4a) is not switched into the tracking mode.

8.  Determining method according to one of the above claims,
    **characterized**
    **in that** the actual states (Z) of the adjusting elements (3) are at least partially lengths (1) or angles of the adjusting elements (3a).

9.  Determining method according to one of the above claims,
    **characterized**
    **in that** the actual states (Z) of the adjusting elements (3) are at least partially positions (p) of the adjusting elements (3b) relative to the basic member (1).

10. Determining method according to one of the above claims,
    **characterized**
    **in that** the actual states (Z) of the adjusting elements (3) are at least partially positions (p') of the adjusting elements (3c) relative to the additional member (2).

11. Determining method according to one of the above claims,
    **characterized**
    **in that** the position of the additional member (2) relative to the basic member (1) comprises a position and/or an orientation of the additional member (2) relative to the basic member (1).

12. Determining method according to one of Claims 1 to 11,
    **characterized**
    **in that** the degree of freedom is a rotary degree of freedom.

13. Determining method according to one of Claims 1 to 11,
    **characterized**
    **in that** the degree of freedom is a translatory degree of freedom.

14. Determining method according to one of the above claims,
    **characterized**
    **in that** the number of adjusting elements (3) is six.

15. Determining method according to one of the above claims,
    **characterized**
    **in that** the change in the position of the additional member (2) is performed differentially.

16. Computer program, stored on a data medium (7), which can be executed by a control and evaluation device (5) for a production machine, the execution of the computer program by the control and evaluation device (5) having the effect that the control and evaluation device (5)

    - in a normal mode makes use of kinematic transformation dependent on actual states (Z) of adjusting elements (3), by means of which a position of an additional member (2) of the production machine relative to a basic member (1) of the production machine is set, in order to determine desired values for the adjusting elements (3) of the production machine, and drives the adjusting elements (3) in accordance with the desired values determined, and

- in a calibration mode, in which the additional member (2) has a single previously known degree of freedom relative to the basic member (1), accepts changes ($\Delta Z$) in state of the adjusting elements (3) detected by position sensors (11) assigned to the adjusting elements (3), and determines the actual states (Z) of the adjusting elements (3) with the aid of the changes ($\Delta Z$) in state of the adjusting elements (3).

17. Control and evaluation device, which can be programmed by means of a computer program (6) according to Claim 16, for a production machine, in particular a machine tool.

18. Production machine, in particular a machine tool, having a basic member (1) and an additional member (2) connected to the basic member (1) via adjusting elements (3), in which the adjusting elements (3) can be adjusted by means of drives (4), in which position sensors (11) are assigned to the adjusting elements (3) in order to detect changes ($\Delta Z$) in state of the adjusting elements (3), and in which the production machine has a control and evaluation device (5) which is designed in accordance with Claim 17 and is connected by data processing to the position sensors (11) and the drives (4).

**Revendications**

1. Procédé de détermination des états ( Z ) réels d'un certain nombre d'éléments ( 3 ) de réglage au moyen desquels on peut régler une position d'un corps ( 2 ) supplémentaire par rapport à un corps ( 1 ) de base,

- dans lequel on immobilise mécaniquement le corps ( 2 ) supplémentaire par rapport au corps ( 1 ) de base de manière à ce qu'il n'ait plus qu'un degré de liberté, de sorte que la position du corps ( 2 ) supplémentaire par rapport au corps ( 1 ) de base puisse être décrite au moyen d'une variable ( $\alpha$ ) scalaire unique,
- dans lequel on modifie la position du corps ( 2 ) supplémentaire après son immobilisation et on relève des modifications ( $\alpha$ ) d'état ainsi provoquées des éléments ( 3 ) de réglage au moyen de capteurs ( 11 ) associés aux éléments ( 3 ) de réglage et
- dans lequel au moyen des modifications ( $\Delta Z$ ) d'état des éléments ( 3 ) de réglage, on détermine les états ( Z ) réels des éléments ( 3 ) de réglage.

2. Procédé de détermination suivant la revendication 1,
**caractérisé**

- **en ce que** l'on détermine une première fonction ( fa ) de transformation qui indique, pour un premier ( 3a ) des éléments ( 3 ) de réglage, la modification d'état qui se produit pour une valeur prescrite de la variable ( $\alpha$ ) et pour une modification ( $\Delta\alpha$ ) prescrite de la variable ( $\alpha$ ),
- **en ce qu'**au moyen de la première fonction ( fa ) de transformation et de la modification ( $\Delta Za$ ) d'état relevée pour le premier élément ( 3a ) de réglage, on détermine une fonction ( g ) de corrélation qui indique la modification ( $\Delta\alpha$ ) de la variable ( $\alpha$ ) qui s'est produite pour une valeur prescrite de la variable ( $\alpha$ et de la modification ( $\Delta Za$ ) d'état relevée du premier élément ( 3a ) de réglage,
- **en ce qu'**en exploitant la fonction ( g ) de corrélation, on détermine au moins une autre fonction ( fb, fc ) de transformation qui indique, pour un autre ( 3b, 3c ) des éléments ( 3 ) de réglage, la modification d'état qui se produit pour une valeur prescrite de la variable ( $\alpha$ ) et de la modification ( $\Delta Za$ ) d'état relevée du premier élément ( 3a ) de réglage,
- **en ce que** l'on détermine une valeur ( $\alpha0$ ) finale de la variable ( $\alpha$ ), pour laquelle la modification d'état déterminée au moyen de la au moins une autre fonction ( fb, fc ) de transformation coïncide avec la modification ( $\Delta Zb$, $\Delta Zc$ ) d'état relevée du au moins un autre élément ( 3b, 3c ) de réglage, et
- **en ce qu'**au moyen de la valeur ( $\alpha0$ ) finale, on détermine la position du corps ( 2 ) supplémentaire par rapport au corps ( 1 ) de base et on en détermine les états ( Z ) réels des éléments ( 3 ) de réglage.

3. Procédé de détermination suivant la revendication 2,
**caractérisé**

- **en ce que** l'on détermine d'abord au moins une valeur ($\alpha0$ ) finale de satisfaction, pour laquelle la modification d'état déterminée au moyen d'une première ( fb ) des autres fonctions ( fb, fc ) de transformation coïncide avec la modification ( ∆Zb ) d'état relevée de l'élément ( 3b ) de réglage correspondant, et

- **en ce qu'**ensuite, en comparant les modifications d'état déterminées pour la valeur ( α0 ) finale de satisfaction de l'autre ( 3c ) des autres fonctions ( fb, fc ) de transformation aux modifications ( ∆Zc ) d'état relevées des éléments ( 3c ) de réglage correspondants, on détermine si la valeur ( α0 ) de satisfaction est la valeur ( α0 ) finale.

**4.** Procédé de détermination suivant la revendication 3,
**caractérisé**

**en ce qu'**à partir de la différence entre la première ( fb ) des autres fonctions ( fb, fc ) de transformation et la modification ( ∆Zb ) d'état relevée de l'élément ( 3b ) de réglage correspondant, on forme une fonction ( H ) auxiliaire et en ce que, pour la détermination des valeurs ( α0 ) de satisfaction, on détermine au moins un point ( α0 ) zéro de la fonction ( H ) auxiliaire.

**5.** Procédé de détermination suivant la revendication 4,
**caractérisé**

**en ce qu'**après la détermination du point ( α0 ) zéro, on divise la fonction ( H ) auxiliaire par la différence de la variable ( α ) et du point ( α0 ) zéro déterminé et on met la fonction ( H ) auxiliaire divisée par la différence entre la variable ( α ) et le point ( α0 ) zéro déterminé à la place de la fonction ( H ) auxiliaire d'origine.

**6.** Procédé de détermination suivant la revendication 4 ou 5,
**caractérisé**

**en ce que** l'on interrompt la détermination des points ( α0 ) zéro de la fonction ( H ) auxiliaire et l'on détermine une valeur ( α0 ) de satisfaction, pour laquelle les modifications d'état déterminées au moyen de l'autre ( fc ) des autres fonctions ( fb, fc ) de transformation coïncident aussi avec les modifications ( ∆Zc ) d'état relevées des éléments ( 3c ) de réglage correspondants.

**7.** Procédé de détermination suivant l'une des revendications ci-dessus,
**caractérisé**

**en ce qu'**aux éléments ( 3 ) de réglage sont associés des entraînements ( 4 ) téléréglés au moyen desquels les éléments ( 3 ) de réglage peuvent être réglés, en ce que les entraînements sont, à l'exception d'un entraînement ( 4a ) unique, montés dans un fonctionnement de poursuite et en ce que la modification de la position du corps ( 2 ) supplémentaire s'effectue par réglage de celui ( 3a ) des éléments ( 3 ) de réglage dont l'entraînement ( 4a ) associé n'est pas monté dans le fonctionnement en poursuite.

**8.** Procédé de détermination suivant l'une des revendications ci-dessus,
**caractérisé**

**en ce que** les états ( Z ) réels des éléments ( 3 ) de réglage sont, au moins en partie, des longueurs ( 1 ) ou des angles des éléments ( 3a ) de réglage.

**9.** Procédé de détermination suivant l'une des revendications précédentes,
**caractérisé**

**en ce que** les états ( Z ) réels des éléments ( 3 ) de réglage sont, au moins en partie, des positions ( p ) des éléments ( 3b ) de réglage par rapport au corps ( 1 ) de base.

**10.** Procédé de détermination suivant l'une des revendications ci-dessus,
**caractérisé**

**en ce que** les états ( Z ) réels des éléments ( 3 ) de réglage sont, au moins en partie, des positions ( p' ) des éléments ( 3c ) de réglage par rapport au corps ( 2 ) supplémentaire.

**11.** Procédé de détermination suivant l'une des revendications ci-dessus,
**caractérisé**

**en ce que** la position du corps ( 2 ) supplémentaire par rapport au corps ( 1 ) de base englobe une position et/ou une orientation du corps ( 2 ) supplémentaire par rapport au corps ( 1 ) de base.

**12.** Procédé de détermination suivant l'une des revendications 1 à 11,
**caractérisé**

**en ce que** le degré de liberté est un degré de liberté en rotation.

**13.** Procédé de détermination suivant l'une des revendications 1 à 11, **caractérisé**
**en ce que** le degré de liberté est un degré de liberté en translation.

**14.** Procédé de détermination suivant l'une des revendications ci-dessus, **caractérisé**
**en ce que** le nombre des éléments ( 3 ) de réglage est de six.

**15.** Procédé de détermination suivant l'une des revendications ci-dessus, **caractérisé**
**en ce que** la modification de la position du corps ( 2 ) supplémentaire s'effectue de façon différentielle.

**16.** Programme informatique mémorisé sur un support ( 7 ) de données et pouvant être réalisé par un dispositif ( 5 ) de commande et d'exploitation d'une machine de production, la réalisation du programme informatique étant provoquée par le dispositif ( 5 ) de commande et d'exploitation par le fait que le dispositif ( 5 ) de commande et d'exploitation

- dans un fonctionnement normal, en utilisant l'un d'états ( Z ) réels d'éléments ( 3 ) de réglage au moyen desquels une position d'un corps ( 2 ) supplémentaire de la machine de production par rapport à un corps ( 1 ) de base de la machine de production est réglée, détermine, en fonction de transformations cinématiques, des valeurs de consigne pour les éléments ( 3 ) de réglage de la machine de production et commande les éléments ( 3 ) de réglage, en fonction des valeurs de consigne déterminées et
- dans un fonctionnement d'étalonnage, dans lequel le corps ( 2 ) supplémentaire a un degré de liberté unique connu à l'avance par rapport au corps ( 1 ) de base, reçoit des modifications ( $\Delta 2$ ) d'état des éléments ( 3 ) de réglage relevées par les capteurs ( 11 ) de position associés aux éléments ( 3 ) de réglage et détermine, au moyen des modifications ( $\Delta Z$) d'état des éléments ( 3 ) de réglage, les états ( Z ) réels des éléments ( 3 ) de réglage.

**17.** Dispositif de commande et d'exploitation programmé par un programme ( 6 ) informatique suivant la revendication 16 pour une machine de production, notamment pour une machine-outil.

**18.** Machine de production, notamment machine-outil, comprenant un corps ( 1 ) de base et un corps ( 2 ) supplémentaire, relié au corps ( 1) de base par des éléments ( 3 ) de réglage, les éléments ( 3) de réglage pouvant être réglés au moyen d'entraînements ( 4 ), dans laquelle aux éléments ( 3 ) de réglage sont associés des capteurs ( 11 ) de position pour relever des modifications ( $\Delta Z$ ) d'état des éléments ( 3 ) de réglage, la machine de production ayant un dispositif ( 5 ) de commande et d'exploitation qui est constitué suivant la revendication 17 et qui est relié du point de vue de la technique des données avec les capteurs ( 11 ) de position et avec les entraînements ( 4 ).

# FIG 1

## FIG 2

```
                    ┌──────────┐
                    │  Start   │
                    └────┬─────┘
                         │
                         ▼           S1
                    ◇ kalibrieren? ◇ ──── −
                         │                          │
                         │ +                        │
                         ▼                          ▼              S9
              ┌────────────────────┐     ┌─────────────────────┐
              │ fixiere Zusatzkörper 2 │ S2  │ rufe Istzustände Z ab │
              └─────────┬──────────┘     └──────────┬──────────┘
                        │                           │
                        ▼          S3               ▼
                   ◇  fixiert?  ◇ ── −     ┌─────────────────────┐
                        │                  │ führe Normalbetrieb aus │
                        │ +                └──────────┬──────────┘
                        ▼                         S10 │
              ┌────────────────────┐                  │
              │ schalte Antriebe 4b und │ S4           │
              │ 4c in Nachführbetrieb  │              │
              └─────────┬──────────┘                  │
                        ▼                             │
              ┌────────────────────┐                 │
              │ steuere Antrieb 4a │ S5               │
              │ differentiell an   │                  │
              └─────────┬──────────┘                  │
                        ▼                             │
              ┌────────────────────┐                 │
              │ erfasse            │ S6               │
              │ Zustandsänderungen ΔZ │               │
              └─────────┬──────────┘                  │
                        ▼                             │
              ┌────────────────────┐                 │
              │ ermittle Istzustände Z │ S7            │
              └─────────┬──────────┘                  │
                        ▼                             │
              ┌────────────────────┐                 │
              │ speichere Istzustände Z ab │ S8        │
              │ beende Nachführbetrieb │              │
              │ der Antriebe 4b und 4c │              │
              └─────────┬──────────┘                  │
                        │◄───────────────────────────┘
                        ▼
                  ┌──────────┐
                  │   Ende   │
                  └──────────┘
```

## FIG 3

```
                    ┌──────────────┐
                    │              │~ S6
                    └──────┬───────┘
                           ↓
        ┌──────────────────────────────┐
        │  ermittle ΔZa=fa(α, Δa)      │~ S11
        └──────────────┬───────────────┘
                       ↓
        ┌──────────────────────────────┐
        │  ermittle Δa=g(α, ΔZa)       │~ S12
        └──────────────┬───────────────┘
                       ↓
        ┌──────────────────────────────┐
        │  ermittle ΔZb=fb(α, g(α,ΔZa)) │~ S13
        └──────────────┬───────────────┘
                       ↓
        ┌──────────────────────────────┐
        │  ermittle ΔZc=fc(α, g(α, ΔZa))│~ S14
        └──────────────┬───────────────┘
                       ↓
        ┌──────────────────────────────┐
        │  H:=ΔZb-fb(α, g(α, ΔZa))     │~ S15
        └──────────────┬───────────────┘
                       ↓
        ┌──────────────────────────────┐
        │  ermittle α0 mit H(α0)=0     │~ S16
        └──────────────┬───────────────┘
                       ↓
        ┌──────────────────────────────┐
        │  ermittle fc(α0, g(α0, ΔZa)) │~ S17
        └──────────────┬───────────────┘
                       ↓
                     S18
                    ◇
              fc=ΔZc?  ──── - ────→  H:= H/(α-α0) ~ S19
                    ◇
                     +
                     ↓
        ┌──────────────────────────────┐
        │  ermittle Lage des Zusatzkörpers 2 │~ S20
        └──────────────┬───────────────┘
                       ↓
        ┌──────────────────────────────┐
        │  bestimme Za, Zb, Zc         │~ S21
        └──────────────┬───────────────┘
                       ↓
                ┌──────────────┐
                │              │~ S8
                └──────────────┘
```

S11: ermittle $\Delta Za = fa(\alpha, \Delta a)$

S12: ermittle $\Delta a = g(\alpha, \Delta Za)$

S13: ermittle $\Delta Zb = fb(\alpha, g(\alpha, \Delta Za))$

S14: ermittle $\Delta Zc = fc(\alpha, g(\alpha, \Delta Za))$

S15: $H := \Delta Zb - fb(\alpha, g(\alpha, \Delta Za))$

S16: ermittle $\alpha 0$ mit $H(\alpha 0) = 0$

S17: ermittle $fc(\alpha 0, g(\alpha 0, \Delta Za))$

S18: $fc = \Delta Zc$?

S19: $H := H/(\alpha - \alpha 0)$

S20: ermittle Lage des Zusatzkörpers 2

S21: bestimme Za, Zb, Zc

## FIG 4

**EP 1 493 538 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19828181 A1